# EUROPEAN PATENT SPECIFICATION

(11) **EP 1 482 128 B1**
(45) Date of publication and mention of the grant of the patent: **11.10.2006**
(21) Application number: 03012017.4
(22) Date of filing: 28.05.2003
(51) Int. Cl.: F01D 17/14, F01D 17/18, F02C 6/12, F04D 27/02, F04D 29/42, F02B 37/24

(54) **Supercharged Internal combustion engine**
Aufgeladener Verbrennungsmotor
Moteur à combustion interne suralimenté

(43) Date of publication of application: 01.12.2004
(73) Proprietor: Ford Global Technologies, LLC., Dearborn MI 48126 (US)
(72) Inventor: Tabar, Said, 41875 Göteborg (SE); Wollin, Johan, 44191 Alingsas (SE)
(74) Representative: Spitmann, Knut Hermann

(56) References cited:
- DE-A- 4 213 047
- US-A- 4 250 711
- US-A- 4 756 161
- US-A- 5 236 301
- US-A- 5 863 178
- US-B1- 6 357 234

## Description

### TECHNICAL FIELD

The invention relates to a supercharged internal combustion engine comprising a compressor impeller and a duct arranged for generation of pre-whirl of air supplied to the compressor impeller. The invention also relates to a method for controlling a supercharged internal combustion engine.

### BACKGROUND

In turbo charged engines, the low end torque is limited the exhaust gas enthalpy and the surge line of compressors. A variable nozzle turbine can be used to maximise the turbine efficiency and hence the power output from the exhaust gas flow at various engine speeds and loads. This can result in an improved low end torque compared to the same engine running with waste gated turbo charger. However, the size of the compressor, which is often stipulated by the engine rated power, will still limit the low-end torque.

One way of increasing the working range of a compressor for a super charged combustion engine is known from DE4213047. The system disclosed therein is arranged to store compressed gas in a compressor tank for introduction of supplementary air into a compressor housing. The main intake duct may be closed at low load such that intake air is supplied only from the compressed air tank. DE4213047 furthermore contemplates to introduce compressed air at different locations of an entrance chamber of the compressor such that gas may be introduced before or after the compressor depending on operating conditions. The system disclosed therein may furthermore be arranged to increase the buffer volume of the entrance chamber by connecting it to the intake air filter, crank housing or the exhaust system. Several drawbacks are related to this manner of increasing the working range of the compressor. For instance, the system needs the inclusion of a compressor tank, which must be of substantial size in order to ensure that the engine can operate at low load for a period of time. The tank will add to the weight of the vehicle, which increases fuel consumption. Losses of power will occur in the process of charging and discharging the tank. The system furthermore needs inclusion of three way valves, which add to the cost of the system. A need for development of further methods for increasing the working range of the compressor therefore still exists.

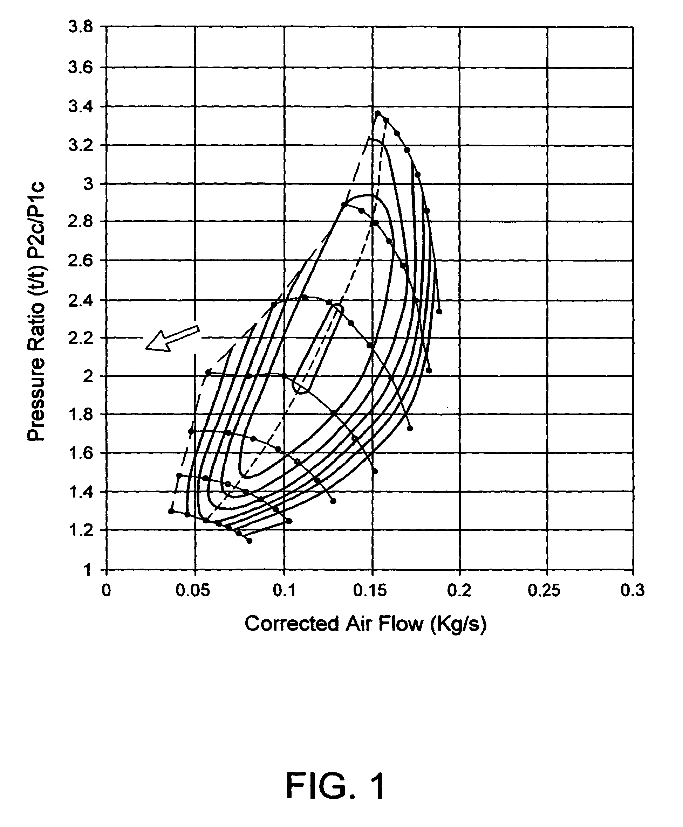

Another method of increasing the working range of the compressor is use of pre-rotating flows in the intake valve. By applying a pre-rotating flow (pre-whirl) into the compressor, the characteristics of the compressor will be changed. Figure 1 displays the working range of a specific turbo compressor. The working range of the compressor is readable from the pressure ratio P2c/P1c on the vertical axis and the air mass flow through the compressor on the horisontal axis, where P2c is the pressure downstream of the compressor and P1c is the pressure upstream of the compressor. A pre-whirl in the same direction as the compressor impeller's rotational direction will shift the compressor map towards lower mass flow rates and lower compressor pressure ratio as indicated by the arrow in Figure 1. This means that the compressor would get the character of a down sized one in that the working range of the compressor is extended to lower mass flow rates. The significance of the map shift depends on the magnitude of the pre-whirl and the impeller blade angle (degree of back sweeping). By applying the required pre-whirl to a correctly designed compressor it is possible to achieve good pressure ratios at flow rates below the compressors inherent surge line.

A way to provide a pre-whirl and thereby achieve an extended compressor map is to provide guide vanes in an air duct upstream of the compressor. For example, a turbo charged marine diesel engine with guide vanes for preventing turbo overspeed and surging is known from GB 2172340. A drawback of this solution is that guide vanes to a certain degree restrict the flow of air through the duct. This flow restriction is unfavourable regarding engine performance at high air flow rates.

### SUMMARY OF THE INVENTION

An object of the invention is to provide a supercharged internal combustion engine in which pre-whirl can be generated at low inlet air flow speeds, and in which the flow resistance at high flow speeds is reduced, as compared to the guide vane solution described above.

Another object of present invention is to provide a supercharged internal combustion engine that is improved in respect of pre-whirl control as well as in respect of engine power and torque performance.

A further object of the invention is to provide a supercharged internal combustion engine with increased reliability of supercharging efficiency.

Still a object of the invention is to provide a supercharged internal combustion engine that is more fuel efficient and that exhausts less unhealthy emissions.

These objects are attained by a supercharged internal combustion engine comprising a compressor impeller for increasing pressure of a gas mixture to be combusted in said engine, and a first duct for supplying said gas mixture to said compressor impeller, said engine further comprising a second duct for supplying additional gas mixture into the first duct at a connection upstream of said compressor impeller.

In particular, the present invention provides a supercharged internal combustion engine further comprising a volute at the connection between the two ducts aud one valve inside each of the two ducts for controlling gas flow through the ducts.

Another object of the invention is to provide an improved method for controlling pre-whirl in a supercharged internal combustion engine.

This object is attained by a method for controlling a supercharged internal combustion engine comprising a compressor impeller for increasing pressure of a gas mixture to be combusted in said engine, wherein said gas mixture is supplied to said compressor impeller via first and second ducts, and generating a pre-whirl in the gas mixture supplied to said compressor impeller upstream of said compressor impeller

In particular, during acceleration of a vehicle propelled by said engine, the inventive method further comprises the following steps for controlling the pre-whirl:
- at low engine speeds controlling a valve in the second duct to be open and a valve in the first duct to be substantially closed,
- as the engine speed increases successively opening the valve in the first duct and succesively closing the valve in the second duct.

That is, when the engine is running at low speed a positive pre-whirl is generated. Later in the acceleration, when the engine is running at a higher speed, no pre-whirl is generated, but instead a minimised flow resistance in the first air duct is achieved.

The invention is especially useful for turbocharged diesel engines. This is due to the fact that the exhaust gases of diesel engines are relatively colder than exhaust gases from petrol engines, and that so called variable nozzles are sensitive to high temperatures. Colder exhaust gases give an opportunity to use a variable nozzle at the exhaust turbine and thereby increase the working range of the exhaust turbine, Therefore it is also desirable to extend the working range of the compressor impeller in order to get the most effect out of the extended working range of the turbine.

In other words, the working range of the exhaust turbine can be extended by means of a fairly temperature sensitive variable nozzle as mentioned by way of introduction. Hence, the working range of the turbocharger is in this case restricted by the compressor impeller's working range, which can be extended by generating a pre-whirl according to the invention.

The invention can also be implemented in a turbocharged petrol engine with a highly temperature resistant variable nozzle turbine. A main throttle downstream of the compressor of the petrol engine can be arranged conventionally. Alternatively, the main throttle can be excluded and the throttling function can be performed by valves (36,38 described below) upstream of the compressor.

In case of a applying a negative pre-whirl, where the pre-whirl direction is opposite to the compressor impeller rotation, the result will be a compressor map shift in the opposite direction. In order to provide both positive and negative pre-whirl in the same engine a third duct similar to the second duct can also be communicatingly connected to the first duct via a volute arranged for generating a negative pre-whirl The second duct is preferably connected to the first duct via a volute arranged for generating a positive pre-whirl. Control of the pre-whirl direction can then be facilitated by adjustment of valves in first, second and third ducts.

### BRIEF DESCRIPTION OF THE DRAWINGS

Figure 1 shows an example of a compressor map or working range of a compressor impeller of a supercharged engine.
Figure 2 shows, schematically, the ducts leading to a compressor according to an embodiment of the invention.
Figure 3 shows, schematically, the ducts leading to a compressor according to another embodiment of the invention.
Figure 4 shows, scematically, the arrangement of a compressor impeller and a volute according to an embodiment of the invention.

### DESCRIPTION OF PREFERRED EMBODIMENTS

The invention is directed to a supercharged internal combustion engine in which the supercharging is provided by a compressor impeller. Said compressor impeller can for example be driven by an electric motor or mechanically via a crankshaft of the engine or from an exhaust turbine, the latter case known as turbo charging.

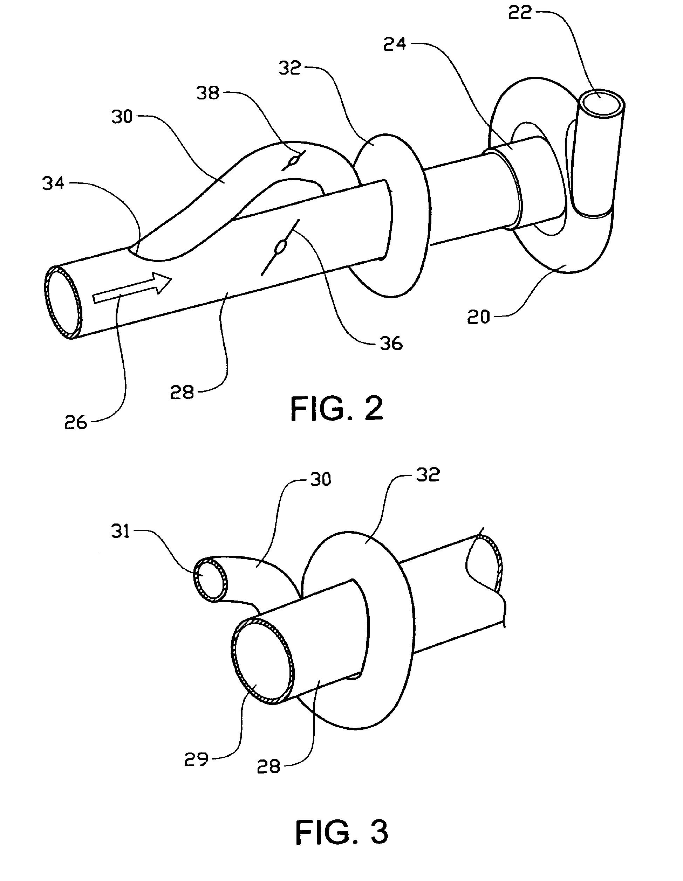

Figure 2 shows a compressor 20 with an outlet 22 for providing compressed air to the combustion chambers of the engine and an inlet 24 for receiving ambient air via an air filter (not shown). The air flow direction is indicated by an arrow 26. Between the air filter and the compressor inlet 24 a first duct 28 and a second duct 30 are provided. First duct 28 constitutes a main flow path for the air flow, while second duct 30 is connected to first duct 28 at a first connection. At the connection air from the second duct 30 is supplied in a substantially tangential manner into first duct 28. For this purpose the first connection comprises a volute 32 so that a flow through second duct 30 contributes to a positive pre-whirl of the air entering into compressor 20. The pre-whirl is in this example generally a rotational motion of air around a center axis of first duct 28 combined with a translation of the air in the longitudinal direction of the first duct 28. In this case all of the engine air is provided via the air filter of first duct 28. The second duct 30 is then fed by a portion of the air flow from first duct 28 at a second connection 34 between the two ducts upstream of the first connection at the volute 32.

To control the magnitude and significance of the pre-whirl depending upon engine speed and load, the first or the second or both ducts are provided with valves, a first valve 36 in first duct 28 and/or a second valve 38 in second duct 30. By adjusting the valves 36,38 the distribution of the air flow between the two ducts can be effectively controlled. An advantage of the two-valve solution is that the flow adjustment possibilities provide a larger range for the pre-whirl magnitude. On the other hand a solution with a valve 38 in second duct 30 and no valve in first duct 28 may be more advantageous for high engine performance reasons since it eliminates from first duct 28 the flow resistance that a valve represents even in its fully open position.

Valves 36 and 38 are preferably designed as butterfly valves which can be actuated via a variety of actuation means. For example, they can be actuated by electric motors which are controlled by signals from the vehicle's engine control computer.

An example of the control strategy can be described as follows. Valve 38 is initially fully open and the air flow is initially directed to the compressor impeller through second duct 30, while the valve 36 is substantially closed. As the mass flow increases and the brake torque approaches maximum, the valve 38 is gradually closed and the valve 36 is opened towards its fully open position. This means that the compressor virtual size is adapted to the mass flow rate during the low end period.

An advantage of using a volute instead of putting pre-whirl guide vanes in front of the compressor impeller is a reduced flow resistance in first duct 28 since guide vanes in ducts represent a flow resistance. This advantage result in improved high performance properties of the engine.

Figure 3 shows another embodiment of the invention in which first and second ducts 28,30 are arranged as ducts with individual air filters and connected to each other only at the volute 32. There is no second connection between the two ducts 28,30 in this embodiment. The end 29 of first duct 28 leads to an air filter (not shown), while the end 31 of second duct 30 leads to another air filter (not shown). An advantage of this embodiment is that the flow resistance is reduced since there is one connection less between the two ducts 28,30.

In the embodiments according to Fig 2 and 3, the additional gas mixture is supplied from said second duct 30 into said first duct 28 in a substantially tangential manner for generating a pre-whirl in said first duct 28. In these embodiments the substantially tangential gas mixture supply is provided for by means of the volute 32. There are however also other possibilities to provide a substantially tangential gas mixture supply, e.g. a simple angled connection between the ducts 28,30.

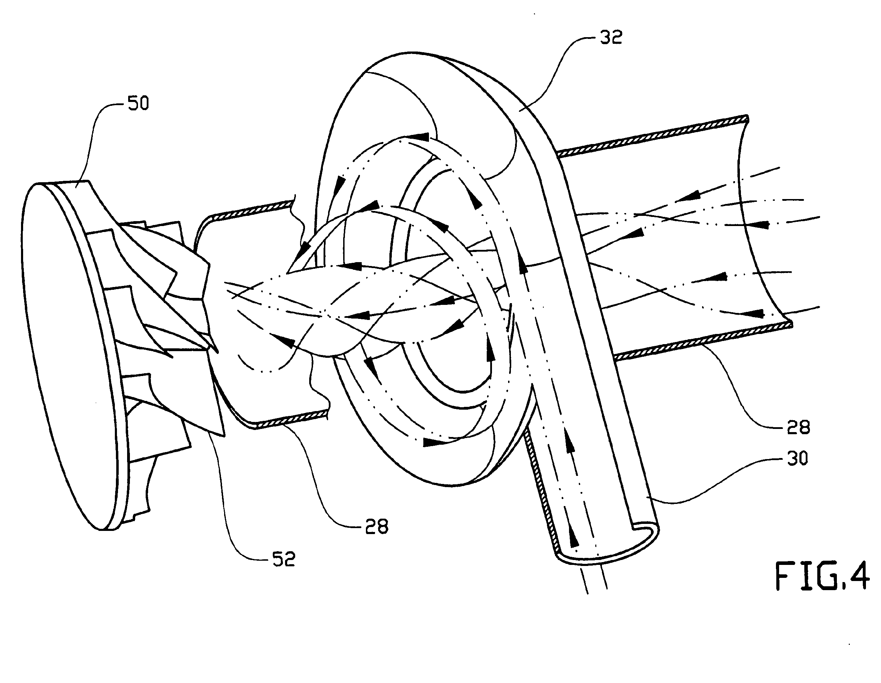

Figure 4 shows in a schematic view an arrangement with a volute 32 and a compressor impeller 50 with back swept blades 52. Preferably, the degree of back sweeping of the blades 52 is between 40° and 45°.

The invention is not restricted to the described embodiments but can be varied within the scope of the appended patent claims.

## Claims

1. A supercharged internal combustion engine comprising a compressor impeller (50) for increasing pressure of a gas mixture to be combusted in said engine, and a first duct (28) for supplying said gas mixture to said compressor impeller (50), wherein the engine further comprises a second duct (30) for supplying additional gas mixture into the first duct (28) at a connection upstream of said compressor impeller (50), **characterized in that** said second duct (30) is arranged to supply a gas mixture into said first duct (30) for generating a pre-whirl in said first duct (28), which pre-whirl has the same rotaional direction as the rotational direction of the impeller.

2. An engine according to claim 1, **characterized in that** the additional gas mixture is supplied from said second duct (30) into said first duct (28) in a substantially tangential manner for generating said pre-whirl in said first duct (28).

3. An engine according to claim 1 or 2, **characterized in that** said connection between first and second ducts (28,30) comprises a volute (32).

4. An engine according to any one of the preceding claims, **characterized in that** a valve (36) is arranged inside said first duct (28), for control of the flow of gas mixture through said first duct (28).

5. An engine according to any one of the preceding claims, **characterized in that** a valve (38) is arranged inside said second duct (30), for control of the flow of said additional gas mixture through said second duct (30).

6. An engine according to any one of the preceding claims, **characterized in that** said first duct (28) is connected to a first air filter and said second duct (30) is connected to a second air filter.

7. An engine according to any one of claims 1-5, **characterized in that** said first duct (28) is connected to an air filter, and **in that** the second duct (30) branches from the first duct (28) upstream of said connection.

8. An engine according to any one of the preceding claims, **characterized in that** said compressor impeller (50) is drivingly connected to an exhaust turbine.

9. A method for controlling a supercharged internal combustion engine comprising a compressor impeller (50) for increasing pressure of a gas mixture to be combusted in said engine, wherein said gas mixture is supplied to said compressor impeller (50) via first and second ducts (28,30), the method comprising the step of upstream of said compressor impeller (50) supplying a gas mixture from said second duct (30) into said first duct (30) and thereby generating a pre-whirl in said first duct (28), which pre-whirl has the same rotational direction as the rotational direction of the compressor impeller (50).

10. A method according to claim 9, **characterized in** supplying gas mixture from said second duct (30) into said first duct (28) in a substantially tangential manner.

11. A method according to claim 9 or 10, **characterized in** controlling the pre-whirl in the gas mixture supplied to the impeller (50) by means of a first valve (36) in said first duct (28).

12. A method according to any one of claims 9-11, **characterized in** controlling the pre-whirl in the gas mixture supplied to the impeller (50) by means of a second valve (38) in said second duct (30).

13. A method according to claim 12, **characterized in that** during acceleration of a vehicle propelled by said engine, said pre-whirl is controlled by the following steps:
at low engine speeds controlling said second valve (38) to be open and said first valve (36) to be substatially closed,
-as the engine speed increases successively opening said first valve (36) and succesively closing said second valve (38).

## Patentansprüche

1. Aufgeladener Verbrennungsmotor mit einem Verdichterlaufrad (50) zur Erhöhung des Drucks eines in dem Motor zu verbrennenden Gasgemisches und einem ersten Kanal (28) zur Zufuhr des Gasgemisches zum Verdichterlaufrad (50), wobei der Motor des Weiteren einen zweiten Kanal (30) zur Zufuhr von zusätzlichem Gasgemisch in den ersten Kanal (28) an einem stromaufwärts des Verdichterlaufrads (50) befindlichen Anschluss umfasst, **dadurch gekennzeichnet, dass** der zweite Kanal (30) zur Zufuhr von Gasgemisch in den ersten Kanal (30) zwecks Erzeugung eines Dralls in dem ersten Kanal (28) angeordnet ist, wobei der Drall die gleiche Drehrichtung aufweist wie die Drehrichtung des Laufrads.

2. Motor nach Anspruch 1, **dadurch gekennzeichnet, dass** das zusätzliche Gasgemisch im Wesentlichen tangential von dem zweiten Kanal (30) in den ersten Kanal (28) zugeführt wird, um den Drall im ersten Kanal (28) zu erzeugen.

3. Motor nach Anspruch 1 oder 2, **dadurch gekennzeichnet, dass** die Verbindung zwischen dem ersten und dem zweiten Kanal (28, 30) einen Diffusor (32) umfasst.

4. Motor nach einem der vorhergehenden Ansprüche, **dadurch gekennzeichnet, dass** ein Ventil (36) innerhalb des ersten Kanals (28) angeordnet ist, um die Strömung des Gasgemisches durch den ersten Kanal (28) zu steuern.

5. Motor nach einem der vorhergehenden Ansprüche, **dadurch gekennzeichnet, dass** ein Ventil (38) in dem zweiten Kanal (30) angeordnet ist, um die Strömung des zusätzlichen Gasgemisches durch den zweiten Kanal (30) zu steuern.

6. Motor nach einem der vorhergehenden Ansprüche, **dadurch gekennzeichnet, dass** der erste Kanal (28) mit einem ersten Luftfilter und der zweite Kanal (30) mit einem zweiten Luftfilter verbunden ist.

7. Motor nach einem der Ansprüche 1 - 5, **dadurch gekennzeichnet, dass** der erste Kanal (28) mit einem Luftfilter verbunden ist und der zweite Kanal (30) von dem ersten Kanal (28) stromaufwärts des Anschlusses abzweigt.

8. Motor nach einem der vorhergehenden Ansprüche, **dadurch gekennzeichnet, dass** das Verdichterlaufrad (50) mit einer Abgasturbine antriebsverbunden ist.

9. Verfahren zur Steuerung eines aufgeladenen Verbrennungsmotors mit einem Verdichterlaufrad (50) zur Erhöhung des Drucks eines in dem Motor zu verbrennenden Gasgemisches, wobei das Gasgemisch dem Verdichterlaufrad (50) über einen ersten und einen zweiten Kanal (28, 30) zugeführt wird, wobei das Verfahren den Schritt des Zuführens eines Gasgemisches aus dem zweiten Kanal (30) in den ersten Kanal (28) stromaufwärts des Verdichterlaufrads (50) und **dadurch** Erzeugens eines Dralls in dem ersten Kanal (28) umfasst, wobei dieser Drall die gleiche Drehrichtung aufweist wie die Drehrichtung des Verdichterlaufrads (50).

10. Verfahren nach Anspruch 9, **gekennzeichnet durch** im Wesentlichen tangentiales Zuführen eines Gasgemisches aus dem zweiten Kanal (30) in den ersten Kanal (28).

11. Verfahren nach Anspruch 9 oder 10, **gekennzeichnet durch** Steuern des Dralls in dem dem Laufrad (50) zugeführten Gasgemisch mittels eines ersten Ventils (36) in dem ersten Kanal (28).

12. Verfahren nach einem der Ansprüche 9 - 11, **gekennzeichnet durch** Steuern des Dralls in dem dem Laufrad (50) zugeführten Gasgemisch mittels eines zweiten Ventils (38) in dem zweiten Kanal (30).

13. Verfahren nach Anspruch 12, **dadurch gekennzeichnet, dass** bei Beschleunigung eines von dem Motor angetriebenen Fahrzeugs der Drall durch die folgenden Schritte gesteuert wird:
- bei niedrigen Motordrehzahlen Steuern des zweiten Ventils (38), so dass es geöffnet wird, und des ersten Ventils (36), so dass es im Wesentlichen geschlossen wird,
- bei zunehmender Motordrehzahl nacheinander folgend Öffnen des ersten Ventils (36) und Schließen des zweiten Ventils (38).

## Revendications

1. Moteur à combustion interne suralimenté comprenant un rouet centrifuge de compresseur (50) pour accroître la pression d'un mélange gazeux à brûler dans ledit moteur et un premier conduit (28) pour alimenter ledit rouet centrifuge de compresseur (50) en ledit mélange gazeux, dans lequel le moteur comprend en outre un second conduit (30) pour fournir un supplément de mélange gazeux dans le premier conduit (28) au niveau d'un raccordement en amont dudit rouet centrifuge de compresseur (50), **caractérisé en ce que** ledit second conduit (30) est disposé pour alimenter en mélange gazeux ledit premier conduit (28) en produisant un pré-tourbillon dans ledit premier conduit (28), lequel pré-tourbillon a le même sens de rotation que le sens de rotation du rouet centrifuge.

2. Moteur selon la revendication 1, **caractérisé en ce que** le supplément de mélange gazeux est alimenté à partir dudit second conduit (30) dans ledit premier conduit (28) de manière sensiblement tangentielle afin de produire ledit pré-tourbillon dans ledit premier conduit (28).

3. Moteur selon la revendication 1 ou 2, **caractérisé en ce que** ledit raccordement entre lesdits premier et second conduits (28, 30) comprend une volute (32).

4. Moteur selon l'une quelconque des revendications précédentes, **caractérisé en ce qu'**une vanne (36) est disposée à l'intérieur dudit premier conduit (28) pour commander l'écoulement de mélange gazeux à travers ledit premier conduit (28).

5. Moteur selon l'une quelconque des revendications précédentes, **caractérisé en ce qu'**une vanne (38) est disposée à l'intérieur dudit second conduit (30) pour commander l'écoulement dudit supplément de mélange gazeux à travers ledit second conduit (30).

6. Moteur selon l'une quelconque des revendications précédentes, **caractérisé en ce que** ledit premier conduit (28) est relié à un premier filtre à air et ledit second conduit (30) est relié à un second filtre à air.

7. Moteur selon l'une quelconque des revendications 1 à 5, **caractérisé en ce que** ledit premier conduit (28) est relié à un premier filtre à air et ledit second conduit (30) se ramifie à partir dudit premier conduit (28) en amont dudit raccordement.

8. Moteur selon l'une quelconque des revendications précédentes, **caractérisé en ce que** ledit rouet centrifuge de compresseur (50) est relié à une turbine d'échappement qui l'entraîne.

9. Procédé de commande d'un moteur à combustion interne suralimenté comprenant un rouet centrifuge de compresseur (50) pour accroître la pression d'un mélange gazeux à brûler dans ledit moteur, dans lequel ledit rouet centrifuge de compresseur (50) est alimenté en ledit mélange gazeux via un premier et un second conduits (28, 30), le procédé comprenant l'étape consistant à fournir dans ledit premier conduit (28) en amont dudit rouet centrifuge de compresseur (50) un mélange gazeux provenant dudit second conduit (30) et à produire ainsi un pré-tourbillon dans ledit premier conduit (28), lequel pré-tourbillon a le même sens de rotation que le sens de rotation du rouet centrifuge de compresseur (50).

10. Procédé selon la revendication 9, **caractérisé en ce que** le mélange gazeux est alimenté à partir dudit second conduit (30) dans ledit premier conduit (28) de manière sensiblement tangentielle.

11. Procédé selon la revendication 9 ou 10, **caractérisé en ce que** l'on commande le pré-tourbillon dans le mélange gazeux fourni au rouet centrifuge (50) au moyen d'une première vanne (36) dans ledit premier conduit (28).

12. Procédé selon l'une quelconque des revendications 9 à 11, **caractérisé en ce que** l'on commande le pré-tourbillon dans le mélange gazeux fourni au rouet centrifuge (50) au moyen d'une seconde vanne (38) dans ledit second conduit (30).

13. Procédé selon la revendication 12, **caractérisé en ce que**, pendant l'accélération d'un véhicule propulsé par ledit moteur, on commande le pré-tourbillon selon les étapes suivantes :
- aux bas régimes moteurs, on commande l'ouverture de ladite seconde vanne (38) et la fermeture plus ou moins complète de ladite première vanne (36) ;
- au fur et à mesure que le régime moteur augmente, on ouvre successivement ladite première vanne (36) et on ferme successivement ladite seconde vanne (38).
